Europäisches Patentamt

European Patent Office

Office européen des brevets

(11) Numéro de publication : **0 374 063 B1**

(12) **FASCICULE DE BREVET EUROPEEN**

(45) Date de publication du fascicule du brevet :
29.04.92 Bulletin 92/18

(51) Int. Cl.⁵ : **A01G 1/06**

(21) Numéro de dépôt : **89420494.0**

(22) Date de dépôt : **14.12.89**

(54) **Procédé de coupe automatique en tronçons d'un corps-mère, notamment de sarments de vigne, et machine de coupe.**

(30) Priorité : **16.12.88 FR 8816963**

(43) Date de publication de la demande :
**20.06.90 Bulletin 90/25**

(45) Mention de la délivrance du brevet :
**29.04.92 Bulletin 92/18**

(84) Etats contractants désignés :
**CH DE ES IT LI**

(56) Documents cités :
FR-A- 2 498 417
SOVIET INVENTIONS ILLUSTRATED, Section
P/Q, semaine 84/28, 22 août 1984, Derwent
Publications Ltd., Londres, GB; & SU-A-1 052
196 (KISH PLODSELKHOZMAS) 07-11-1983

(56) Documents cités :
SOVIET INVENTIONS ILLUSTRATED, Section
P/Q, semaine 84/12, 2 mai 1984, Derwent Publications Ltd., Londres, GB; & SU-A-1 021 413
(MOLD WINE GROWING) 07-06-1983
SOVIET INVENTIONS ILLUSTRATED, Section
P/Q, semaine 8449, 23 janvier 1984, Derwent
Publications Ltd., Londres, GB; & SU-A-1 085
557 (CRIMEA WINE IND. CO.) 15-04-1984

(73) Titulaire : **DURAND INTERNATIONAL Société
Anonyme :
Baix
F-07210 Chomerac (FR)**

(72) Inventeur : **Durand, Lucien
Avenue de la Gare
F-07210 Baix (FR)**

(74) Mandataire : **Ropital-Bonvarlet, Claude
Cabinet BEAU DE LOMENIE, 51, avenue
Jean-Jaurès
F-69007 Lyon (FR)**

Jouve, 18, rue Saint-Denis, 75001 PARIS

## Description

La présente invention concerne le domaine technique général de la coupe en longueur ou en tronçons d'un corps-mère dont les tronçons doivent, impérativement, satisfaire à des paramètres spécifiques incluant des contraintes de longueur, de position et de nombre de repères sur le tronçon considéré.

Un domaine technique particulier, dans lequel on a recours à la coupe en tronçons à partir d'un corps-mère et qui illustre particulièrement bien les problèmes liés aux contraintes de coupe, est celui de la coupe en tronçons des sarments ou boutures de vignes.

La récolte des sarments de vigne, qui se présentent sous la forme de corps ou tiges allongés serpentant au sol à partir de vignes mères, consiste à séparer mécaniquement les tiges de la vigne mère. Les produits obtenus constituent les sarments de vigne dont la longueur varie, en général, entre trois et cinq mètres. Les sarments sont destinés, après leur coupe en tronçons, à former une série de porte-greffes employés pour la culture de la vigne par greffage. Traditionnellement, on considère que l'obtention d'un porte-greffe passe par une suite d'étapes classiques comprenant l'élimination des vrilles ou pousses latérales du sarment, la coupe du sarment en boutures et la préparation des porte-greffes proprement dits par coupe en tronçons des boutures. On peut, également, obtenir directement des porte-greffes à partir des sarments de vigne et supprimer ainsi l'étape de préparation des boutures. Seules, les opérations de préparation des boutures et des porte-greffes sont concernées ci-après.

Les techniques de viticulture imposent des contraintes très précises quant à la longueur des porte-greffes, à leur diamètre, au nombre de bourgeons présents sur le porte-greffe et à la distance entre le ou les bourgeons et l'extrémité du porte-greffe. Ces contraintes, qui ont pour but de réaliser des porte-greffes sains et viables, susceptibles d'initier, à la fois, un bon développement racinaire et un bon démarrage du greffon, ont été codifiées et font l'objet de normes et règlements bien connus dans le secteur viticole. Les contraintes mentionnées ci-dessus ont, bien évidemment, une incidence sur la préparation des boutures dont la coupe doit être effectuée pour tenir compte de la coupe ultérieure des porte-greffes.

Jusqu'à présent, la préparation des boutures et des porte-greffes se fait manuellement par coupe aux longueurs standards et normalisées qui sont de 0,40, 0,60, 1,08, 1,20 mètre pour les boutures et de 0,23 à 0,40 mètre pour les porte-greffes. L'opérateur doit, également, respecter des contraintes de distance entre les bourgeons et la coupe qui, en général, ne doit pas intervenir à moins de 2 centimètres du bourgeon. Il est, en outre, avantageux de pouvoir compter deux bourgeons sur la longueur du porte-greffe. On doit, enfin, éliminer les porte-greffes ou boutures dont le diamètre est insuffisant et, par exemple, inférieur à 6,5 millimètres.

On comprend aisément que cette opération, purement manuelle de préparation des boutures ou des porte-greffes, si elle permet d'obtenir des porte-greffes répondant aux normes, souffre de nombreux inconvénients. Cette opération, comme toutes les opérations manuelles, est longue et fastidieuse, le rendement est faible et la rentabilité économique n'est pas assurée.

On connaît déjà, d'après la demande soviétique SU-A-429 105, une machine automatique de coupe destinée à la coupe à longueur de porte-greffes pour vignes. La machine connue comporte un dispositif d'entraînement du corps-mère, un dispositif de coupe à poste fixe, en l'occurence une lame mobile dans un guide-lame, et un volet mobile de détection de longueur du corps-mère. Un ensemble de détecteurs optiques assure la détection des noeuds en amont de la lame de coupe lorsque le volet mobile est actionné. La coupe intervient alors à proximité du noeud.

Une telle machine n'est cependant pas à même de réaliser une coupe du porte-greffes à une distance spécifique et régulière des noeuds en relation avec la longueur du porte-greffes, de telle sorte que l'homogénéité et la qualité des porte-greffes obtenus ne sont pas assurées, et que le développement racinien ultérieur des porte-greffes est hypothéqué. Il s'ensuit des risques de pertes importantes et un besoin de contrôle postérieur incompatible avec une bonne automatisation du procédé. Les moyens de détection des noeuds ne sont, par ailleurs, pas adaptés à des corps-mères de formes et dimensions variées et variables, ce qui limite l'utilisation d'une telle machine.

La mécanisation et l'automatisation de telles opérations répondent donc à un besoin manifeste non encore entièrement satisfait.

L'objet de l'invention vise, en conséquence, à proposer un procédé et une machine automatique assurant la coupe en tronçons d'un corps-mère, du type sarments de vigne notamment, suivant des paramètres dimensionnels et de position de repères fixes, ne présentant pas les inconvénients des procédés et des machines de coupe antérieurs et nécessitant une intervention manuelle limitée.

Un autre objet de l'invention est de proposer un procédé et une machine de coupe utilisables pour la coupe de corps-mères variés et de dimensions variables.

L'invention a, également, pour objet de proposer un procédé et une machine automatique de coupe en tronçons d'un corps-mère, permettant une mécanisation complète de l'opération de coupe, tout en prenant en compte les divers paramètres et normes de coupe requis suivant l'application considérée.

Ces objectifs sont atteints par un procédé de coupe automatique en tronçons à partir d'un corps-mère, du type sarments ou boutures de vigne, de forme allongée, dont la longueur, délimitée par deux extrémités, comporte à intervalles réguliers ou non, une suite de repères fixes correspondant à une modification du profil de la section du corps-mère, ledit corps étant amené à défiler selon une direction d'une extrémité à l'autre dans un chemin de défilement par l'intermédiaire d'au moins un moyen d'entraînement devant un dispositif de coupe occupant une position fixe, ledit procédé étant caractérisé en ce qu'il consiste :

– en partant d'une extrémité du corps-mère, à identifier le premier des repères fixes qui est situé à une distance supérieure ou égale à une valeur préétablie de ladite extrémité, puis à réaliser une première coupe du corps-mère à cette distance du premier repère fixe identifié,

– à introduire le corps-mère dans ou sur le chemin de défilement afin d'assurer le défilement du corps-mère selon la direction,

– à détecter en continu et en amont du dispositif de coupe, les repères fixes au fur et à mesure du défilement du corps-mère,

– à détecter lorsqu'est atteinte une longueur préétablie correspondant à la longueur de la portion du corps-mère comprise entre son extrémité issue de la première coupe et l'outil de coupe,

– à effectuer une seconde coupe du corps-mère à l'aide du dispositif de coupe fixe lorsque, simultanément, la longueur est atteinte et qu'un repère fixe est détecté en amont de l'outil de coupe à la distance,

– à réaliser $\underline{n}$ coupes supplémentaires selon les mêmes critères de longueur et de distance utilisés pour la seconde coupe jusqu'à la fin du défilement du corps-mère.

Diverses autres caractéristiques ressortent de la description faite ci-dessous en référence aux dessins annexés qui montrent, à titre d'exemples non limitatifs, des formes de réalisation de l'objet de l'invention.

La **fig. 1** montre une vue générale en perspective d'une machine conforme à l'invention.

La **fig. 2** montre une vue schématique simplifiée des différents éléments constituant la machine selon l'invention.

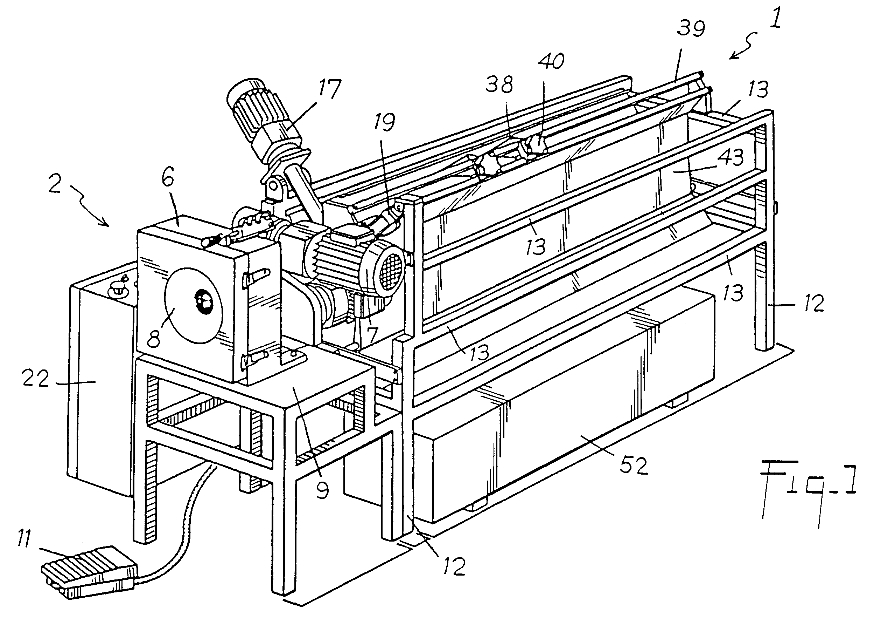

La machine de coupe automatique **1**, montrée à la **fig. 1**, est généralement associée, lorsqu'elle est employée pour la coupe de sarments de vigne, avec un dispositif d'enlèvement **2** des vrilles **3** présentes sur le sarment de vigne dénommé aussi corps-mère **4**. Le dispositif d'enlèvement **2** ne faisant pas partie de l'objet de l'invention, sa description ne sera pas faite en détail et vise, simplement, à décrire le contexte technique dans lequel se situe l'objet de l'invention. L'enlèvement des vrilles **3** ou pousses latérales des sarments de vigne est réalisé à l'aide d'une série de couteaux rotatifs **5** montés radialement dans un boîtier **6** et entraînés en rotation par un moyen d'entraînement, un moteur **7** par exemple. Les couteaux **5** sont montés radialement, de manière à définir entre eux un diaphragme dans lequel le sarment, dont la périphérie doit être nettoyée, est introduit par une ouverture d'amenée **8**, ménagée dans le boîtier **6**. Le dispositif d'enlèvement **2** peut être fixé directement sur la machine de coupe **1** ou mis en place séparément à l'aide d'un bâti support **9** contre la machine de coupe **1**.

Une fois l'opération de nettoyage périphérique réalisée, les sarments de vigne se présentent sous la forme d'un corps de forme allongée, sensiblement cylindrique, dénommé ci-après corps-mère **4**. Ce terme recouvre également les boutures obtenues par coupe des sarments, en vue de faciliter leur manutention par création de lots groupés de boutures. La section transversale du corps-mère **4** comporte, à intervalles plus en moins réguliers, des variations ou modifications caractéristiques du profil de sa section qui se traduisent, dans le cas des sarments ou boutures de vigne, par une augmentation de son diamètre. Ces variations caractéristiques constituent une série de repères fixes **10** qui correspondent à des noeuds ou à des bourgeons du sarments.

La machine de coupe automatique **1** comprend un bâti principal constitué, par exemple, d'un ensemble de barres verticales **12** formant appui sur le sol et reliées entre elles par une série de longerons **13** disposés à différentes hauteurs.

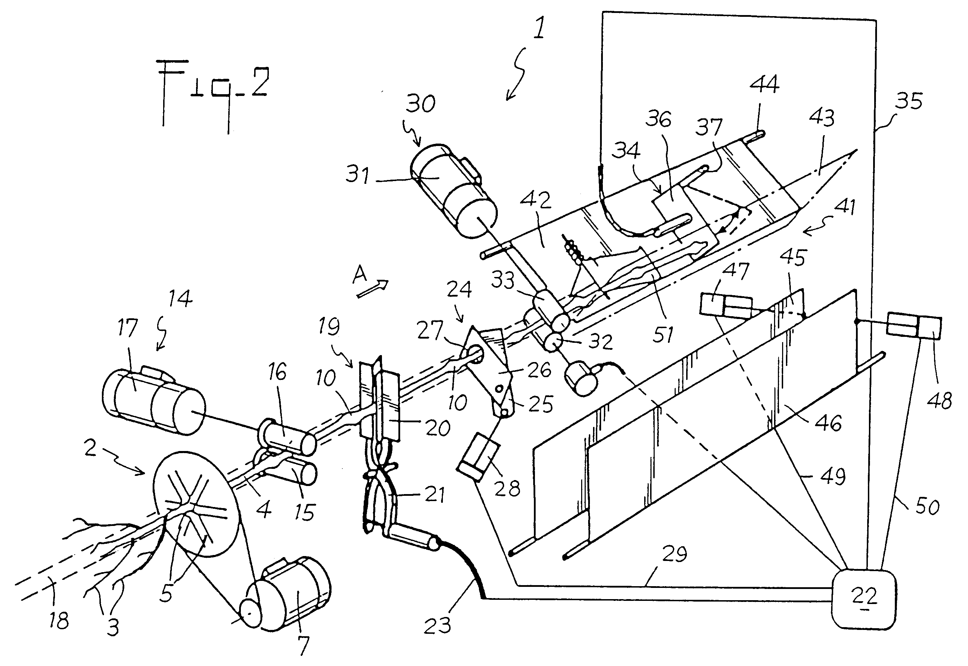

Le bâti principal supporte les différents éléments constituant la machine de coupe automatique **1** dont une vue schématique est représentée à la **fig. 2**.

La machine de coupe comprend un premier dispositif d'entraînement **14** du corps-mère **4**, ici en l'occurence un sarment de vigne constitué d'une paire de galets **15**, **16** entraînés au moyen d'un moteur électrique **17**, par exemple, et entre lesquels le corps **4** défile selon une direction **A** et selon un chemin de défilement **18**.

Il doit être considéré que d'autres dispositifs d'entraînement sont possibles, tels des convoyeurs, à bandes ou à rouleaux, et que le chemin de défilement **18** peut être matérialisé par un élément de guidage incorporé dans la machine ou bien faire simplement référence à l'enveloppe théorique du corps **4** défilant à travers toute la machine **1**. On notera, également, que la direction **A** définit, en relation avec le chemin de défilement **18**, une référence aval et amont. Un organe de commande **11**, du type commande à pieds par exemple, est avantageusement relié au dispositif d'entraînement **14** et permet à l'opérateur la mise en marche ou l'arrêt du dispositif **14**.

Un dispositif de détection **19** des repères fixes **10** est monté sur le bâti principal et est interposé dans le chemin de défilement **18** en aval du dispositif d'entraînement **14**. Le dispositif de détection **19** peut être constitué d'un capteur de déplacement **20** chargé de palper le diamètre du corps **4** au fur et à mesure de son défilement, par l'intermédiaire d'une liaison articulée **21** en forme de ciseaux, par exemple. D'autres formes de réalisations du capteur **20** sont, bien évidemment, possibles sans sortir du cadre de l'invention. Le capteur **20** envoie un courant linéaire et proportionnel à son déplacement vers un automate **22** de contrôle et de commande auquel il est relié fonctionnellement, par l'intermédiaire d'un circuit de connexion **23**. Le signal ou courant reçu est transformé en valeur numérique assimilable par l'automate **22** au moyen, par exemple, d'un bloc convertisseur analogique/digital. Cette valeur numérique est ensuite traitée par le programme propre de l'automate **22**, comme cela sera expliqué ultérieurement.

Un dispositif de coupe **24** est disposé en aval du dispositif de détection **19** et est monté à demeure sur le bâti principal. Dans l'exemple de réalisation montré à la **fig. 2**, il comporte un organe de coupe **25** mobile entre une position de repos hors du chemin de défilement **18** et une position de coupe dans laquelle l'organe **25** est situé dans le chemin de défilement **18** et s'étend sensiblement perpendiculairement à la direction de défilement **A**. L'organe de coupe **25**, qui peut se présenter sous la forme d'une lame de coupe, est mobile par rapport à un bloc-support **26** fixe qui, dans l'exemple montré, assure une fonction de contre-lame de coupe et est interposé dans le chemin de défilement **18**. Le bloc-support **26** comporte un orifice **27** pour le passage du corps-mère **4**. Un organe de commande **28**, du type vérin hydraulique ou pneumatique, relié fonctionnellement par un circuit de connexion **29** à l'automate **22**, est adapté sur l'organe de coupe **25**. D'autres modes de réalisation du dispositif de coupe **24** sont, bien évidemment, envisageables sans sortir du cadre de l'invention, tels des dispositifs de coupe rotatifs.

La **fig. 2** montre un second dispositif d'entraînement **30** disposé en aval du dispositif de coupe **24**, afin d'assurer la continuité de la progression du corps **4** après sa coupe en tronçons. Dans l'exemple choisi, il se compose d'un bloc moteur **31** entraînant deux galets **32**, **33** superposés entre lesquels défilent les tronçons ou le corps **4**. Le dispositif **30** est également relié fonctionnellement à l'automate **22** par l'intermédiaire d'un circuit de liaison. Il doit être noté que d'autres types de dispositifs d'entraînement peuvent être employés en relation avec le premier dispositif d'entraînement **14**. En particulier, un dispositif d'entraînement unique, par exemple à bandes ou à rouleaux, pourrait remplacer les deux dispositifs **14** et **30**.

En aval du dispositif de coupe **24**, on monte un dispositif de détection **34** de longueur, relié fonctionnellement à l'automate **22** au moyen d'un circuit **35**. Dans l'exemple d'un schéma de réalisation, le dispositif de détection **34** de longueur comporte un volet **36** qui est mobile entre une position de butée dans laquelle il obstrue complètement le chemin de défilement **18** et une position d'effacement dans laquelle le chemin de défilement **18** est libre. Le volet **36** est monté mobile autour d'un axe **37**, l'ensemble étant fixé sur un coulisseau **38**, montré partiellement à la **fig. 1**, libre en coulissement contre un jeu de glissières **39**. Le coulisseau **38** est muni d'un système de blocage **40** de position par rapport aux glissières **39**. Il est ainsi possible de régler la distance du volet **36** par rapport au dispositif de coupe **24**.

La partie terminale du chemin de défilement **18** est constituée par un dispositif de triage et de sélection **41** des tronçons du corps-mère **4**. Le dispositif **41** peut comporter une première série de trappes **42**, **43** qui, dans l'exemple représenté, forment un profil en **"V"** dont la pointe constitue le chemin de défilement **18**. Seule la trappe **42** est montée mobile et escamotable autour d'un axe **44** par l'intermédiaire d'un organe de commande, non représenté sur les figures. Il est possible de compléter le dispositif de triage et de sélection **41** en disposant une seconde série de trappes **45**, **46** sous la première série de trappes **42**, **43**. Les deux trappes **45**, **46** sont parallèles, de façon à délimiter un couloir entre elles, mobiles et escamotables au moyen d'organes de commande **47**, **48**, tels que des vérins hydrauliques ou pneumatiques, reliés fonctionnellement à l'automate **22**, par des circuits **49**, **50**. Le montage et l'agencement des trappes escamotables **42**, **45** et **46** permettent ainsi de réaliser un triage à trois voies des tronçons du corps-mère **4**.

Il est également envisageable de prévoir un volet presseur-éjecteur **51** disposé au-dessus des trappes **42**, **43**, afin de faciliter et d'assurer l'éjection du tronçon résultant de la coupe du corps-mère **4**.

On disposera, également, sous le bâti principal **11**, en regard du dispositif de triage et de sélection **41**, des bacs **52** de récupération des tronçons triés.

L'automate **22** de contrôle et de commande automatique du fonctionnement de la machine de coupe **1** est constitué d'éléments et d'unités classiques pour l'homme du métier et il ne sera pas, en conséquence, décrit en détail. Il comprend, notamment, outre le bloc convertisseur analogique-digital déjà mentionné, des registres de calcul, de stockage et de comparaison de données, ainsi que des temporisateurs. Le programme de l'automate **22** doit lui permettre d'effectuer des séries de deux mesures successives du diamètre du corps-mère **4** à intervalles, par exemple, de 100 millisecondes. La seconde mesure est additionnée d'une valeur constante dite "de sensibilité" destinée à éliminer les valeurs de mesure aberrantes. Pour déterminer la présence d'un repère fixe **10**, l'automate **22** va comparer, à un moment approprié, les deux valeurs des mesures successives du diamètre et détecter la présence d'une variation de diamètre, donc d'un repère fixe **10**, si les deux valeurs diffèrent.

Pour tenir compte de l'évolution différentielle du diamètre du corps-mère **4** qui, dans le cas d'un sarment de vigne, diminue d'une extrémité à l'autre, il est nécessaire de prévoir une réactualisation dans le temps de la constante de sensibilité.

L'automate **22** doit, également, être programmé pour déterminer, à partir de la lecture des valeurs de mesure du diamètre du corps-mère **4** et par comparaison avec une valeur de consigne, l'apparition d'un diamètre du corps-mère non acceptable par rapport à cette valeur de consigne. Le résultat de cette comparaison est utilisé par l'automate **22** pour commander le dispositif de triage et de sélection **41**.

Enfin, l'automate **22** peut être muni d'un registre de comptage des repères fixes **10** détectés.

D'autres particularités et aspects de la machine automatique de coupe et de l'automate **22** apparaîtront mieux à la lumière du fonctionnement de la machine décrit en prenant l'exemple de la coupe d'un sarment de vigne, en vue de la préparation de boutures de vigne.

L'opérateur commence par positionner le dispositif de détection **34** de longueur à la distance souhaitée par rapport au dispositif de coupe **24**, à l'aide du coulisseau **38** et du système de blocage **40**. Dans l'exemple considéré de la préparation des boutures de vigne, les longueurs normalisées acceptables sont de 0,40, 0,60, 0,80, 1,08, 1,20 mètre et le volet **36** sera, en conséquence, positionné à l'une de ces distances **L** du dispositif de coupe **24**.

L'opérateur va, ensuite, se saisir d'un sarment de vigne et effectuer une première coupe du sarment qui peut être manuelle, à partir de l'une de ces deux extrémités et de façon que le premier noeud **10** ou bourgeon identifié à partir de ladite extrémité se trouve à une distance préétablie $x$ de l'extrémité coupée. En règle générale, la coupe doit se situer à une distance également normalisée, généralement à 2 centimètres du premier noeud **10**. Bien évidemment, si le premier noeud identifié se trouve à moins de 2 centimètres de l'extrémité du sarment, l'opérateur prendra le noeud suivant comme référence et effectuera la première coupe à 2 centimètres dudit noeud suivant. Il doit, également, être considéré que la première coupe est effectuée, de préférence, à partir de l'extrémité du plus fort diamètre du sarment. L'inverse est cependant également possible.

La machine de coupe **1** est, ensuite, mise en marche par l'opérateur au moyen de l'organe de commande **11**, lequel actionne le ou les dispositifs d'entraînement **14** et **30**. Auparavant, l'opérateur a également accompli les opérations de réglage de l'automate **22** qui consistent, notamment, à afficher les valeurs de consigne liées au fonctionnement de la machine de coupe **1** : vitesse de défilement du corps-mère **4**, c'est-à-dire des dispositifs d'entraînement **14**, **30**, distance de coupe $x$ souhaitée après la détection d'un noeud **10**, emploi du dispositif de triage et de sélection **41**, fixation du seuil minimal acceptable pour le diamètre du corps **4**, etc. Dans le cas présent, la distance de coupe $x$ souhaitée est de 2 centimètres et le diamètre minimal requis pour les boutures est de 6,5 millimètres.

Le sarment de vigne, qui a été auparavant débarrassé de ses pousses **3** et vrilles latérales, est introduit dans la machine de coupe **1** par son extrémité coupée, puis est entraîné selon la direction **A** dans le chemin de défilement **18** à travers la machine, jusqu'à ce que son extrémité aval entre en contact avec le volet **36** détecteur de longueur. Au fur et à mesure du défilement du sarment, les noeuds ou bourgeons **10** sont détectés par le capteur **20**, en relation avec l'automate **22**. L'actionnement du volet **36** signifie que la longueur souhaitée **L** est atteinte et que la coupe à longueur de la bouture peut désormais intervenir. Par le biais du circuit **35**, l'automate **22** est alors sollicité et il contrôle la position du dernier noeud **10** mis en évidence, en amont du dispositif de coupe **24**, par le dispositif de détection **19**. La vitesse de défilement du sarment étant connue, de même que la distance entre le capteur **20** et la tête de coupe **25**, l'automate **22** détermine la position exacte du dernier noeud en amont du dispositif de coupe **24**. L'actionnement de la lame de coupe **25** n'interviendra que lorsque le noeud **10**, en amont de la lame **25**, sera à une distance de 2 centimètres. Le pivotement du volet **36** autour de son axe **37** permet le défilement du sarment lorsque la longueur **L** est atteinte. Il faut ainsi que les deux conditions **L** et $x$ de longueur soient successivement et simultanément atteintes pour que la seconde coupe intervienne. Si le noeud **10** détecté est à moins de 2 centimètres, la coupe interviendra en relation avec le noeud **10** suivant. La coupe à longueur est donc obtenue par excès.

Les deux paramètres de longueur **L** et $x$ étant satisfaits, la bouture obtenue est acceptable et l'automate **22** va pouvoir commander l'une des trois voies de triage possibles, par exemple la trappe **42** et la trappe **45**. Si l'un des deux paramètres, ou bien encore les deux, ne sont pas satisfaits, l'automate **22** commandera une autre voie de triage, par exemple la trappe **42** et la trappe **46**.

Un autre paramètre à considérer est celui du diamètre minimal requis. Lorsque l'automate reconnaît, par comparaison avec la valeur de consigne entrée par l'opérateur, que les valeurs de mesure du diamètre du corps effectuées par le capteur **20** sont inférieures à ladite valeur de consigne, la troisième voie de triage sera employée. Il s'agira, dans l'exemple représenté, de l'actionnement de la seule trappe **42**, la bouture tombant ensuite dans l'espace libre situé entre les deux trappes **45**, **46** non actionnées.

Les opérations de coupe se poursuivent suivant les mêmes paramètres **L** et $x$ jusqu'à ce que la totalité du sarment défile dans la machine de coupe **1**. L'opérateur peut, ensuite, arrêter à nouveau la machine à l'aide de l'organe de commande **11**, préparer un autre sarment, puis l'introduire à nouveau dans la machine de coupe **1**.

La machine de coupe **1** et le procédé décrit se prêtent, également, bien à la coupe en longueur de porte-greffes obtenus directement à partir d'un sarment ou à partir d'une bouture. La réalisation de porte-greffes nécessite une coupe de la bouture respectant les mêmes paramètres que ceux mentionnés pour la réalisation d'une bouture : longueur minimale **L**, coupe à une distance $\underline{x}$ du dernier noeud détecté et diamètre minimal. La longueur minimale **L** est cependant inférieure, puisque les longueurs standards varient de 0,23 à 0,40 mètre, la valeur la plus répandue étant de 0,25 mètre. La coupe doit, également, intervenir, de préférence, à 2 centimètres en aval du dernier noeud détecté. Il existe, cependant, une condition supplémentaire relative au nombre **N** de noeuds présents sur le porte-greffes qui doit être égal à deux. C'est la raison pour laquelle la coupe n'intervient que lorsque le registre de comptage de l'automate **22** a enregistré le passage de deux noeuds **10**, la coupe survenant à 2 centimètres en aval du troisième noeud **10** détecté. Il est bien évident que la valeur de **N**, qui est une valeur de consigne de l'automate **22**, peut être modifiée au gré de l'utilisateur, avant la mise en marche de la machine. L'automate **22** commande, de la même façon que précédemment décrit, le dispositif de triage et de sélection **41** pour effectuer, par exemple, un tri des porte-greffes en fonction des longueurs acceptables, des longueurs incorrectes et des diamètes insuffisants.

La machine de coupe et le procédé qui viennent d'être décrits conduisent ainsi à la coupe automatique en tronçons d'un corps-mère qui peut être un sarment de vigne ou un élément tubulaire de section quelconque. L'automatisation ainsi réalisée permet de s'affranchir de la série des opérations de mesure et de coupe qui étaient exclusivement manuelles jusqu'à présent. Le rendement de cette opération est, en conséquence, fortement augmenté. Il est, d'autre part, aisé de changer les paramètres de coupe, en raison de la simplicité des manoeuvres à effectuer pour modifier les valeurs de consigne de l'automate **22**. Il doit, également, être noté que le procédé et la machine de coupe permettent d'obtenir, à grande échelle, des produits aux caractéristiques variées.

## Revendications

1. Procédé de coupe automatique en tronçons à partir d'un corps-mère (**4**) du type sarments ou boutures de vigne, de forme allongée, dont la longueur, délimitée par deux extrémités, comporte, à intervalles réguliers ou non, une suite de repères fixes (**10**) correspondant à une modification du profil de la section du corps-mère (**4**), ledit corps étant amené à défiler selon une direction (**A**) d'une extrémité à l'autre dans un chemin de défilement (**18**) par l'intermédiaire d'au moins un moyen d'entraînement (**14, 30**) devant un dispositif de coupe (**24**) occupant une position fixe, le procédé de coupe consistant :

– à introduire le corps-mère (**4**) par une extrémité dans ou sur le chemin de défilement (**18**), afin d'assurer le défilement du corps-mère (**4**) selon la direction (**A**),

– à détecter, en amont du dispositif de coupe (**24**), les repères fixes (**10**),

– à détecter lorsqu'est atteinte une longueur préétablie (**L**) correspondant à la longueur de la portion du corps-mère comprise entre l'extrémité d'introduction et l'outil de coupe (**24**),

– à effectuer une coupe du corps-mère (**4**), à l'aide du dispositif de coupe fixe (**24**),

ledit procédé étant caractérisé en ce qu'il consiste :

– préalablement à l'introduction du corps-mère (**4**) à identifier, en partant d'une extrémité du corps-mère (**4**), le premier des repères fixes (**10**) qui est situé à une distance supérieure ou égale à une valeur préétablie ($\underline{x}$) de l'extrémité d'introduction, puis à réaliser une première coupe du corps-mère (**4**) à cette distance ($\underline{x}$) du premier repère fixe (**10**) identifié,

– à détecter les repères fixes (**10**) en continu et au fur et à mesure du défilement du corps-mère (**4**),

– à effectuer une seconde coupe du corps-mère (**4**) à l'aide du dispositif de coupe fixe (**24**) lorsque, simultanément, la longueur (**L**) est atteinte et qu'un repère fixe (**10**) est détecté en amont de l'outil de coupe à la distance ($\underline{x}$),

– à réaliser $\underline{n}$ coupes supplémentaires selon les mêmes critères de longueur (**L**) et de distance ($\underline{x}$) utilisés pour la seconde coupe jusqu'à la fin du défilement du corps-mère (**4**).

2. Procédé selon la revendication 1, caractérisé en ce que la détection des repères fixes (**10**) consiste à apprécier la variation de la section du corps-mère (**4**) par des mesures de dimensions prises à intervalles de temps successifs.

3. Procédé selon la revendication 2, caractérisé en ce que la variation de la section du corps-mère est appréciée par comparaison de deux mesures successives, la seconde étant augmentée d'une constante de sensibilité.

4. Procédé selon la revendication 3, caractérisé en ce que la valeur de la constante de sensibilité est réactualisée en permanence pour tenir compte d'une variation de forme progressive du corps-mère (**4**) d'une extrémité à l'autre.

5. Procédé selon la revendication 3 ou 4, caractérisé en ce que les valeurs de mesure de la variation de la section du corps-mère (**4**) sont comparées à une valeur minimale préétablie correspondant à un seuil minimum acceptable pour les dimensions de la section du corps-mère (**4**).

6. Procédé selon la revendication 1, caractérisé en ce qu'il consiste, en outre, à assurer le comptage de chaque repère fixe (**10**) détecté en amont du dispositif de coupe (**24**).

7. Procédé selon la revendication 6, caractérisé en ce que la coupe du corps-mère (**4**) est effectuée à l'aide du dispositif de coupe (**24**) lorsque, simultanément, la longueur (**L**) est atteinte, un repère fixe est détecté en amont du dispositif de coupe à une distance (x) de l'outil de coupe et un nombre (**N**) de repères fixes (**10**) est compté.

8. Procédé selon la revendication 7, caractérisé en ce que le nombre (**N**) est égal à deux.

9. Procédé selon l'une des revendications 5 à 8, caractérisé en ce qu'il consiste, en outre, à effectuer un triage et une sélection des tronçons coupés en fonction du résultat de la comparaison des valeurs de mesure de la section du corps-mère avec la valeur minimale préétablie.

10. Procédé selon la revendication 9, caractérisé en ce qu'il consiste à effectuer un triage et une sélection des tronçons coupés en fonction de la longueur (**L**).

11. Machine de coupe (**1**) automatique en tronçons d'un corps-mère (**4**), du type sarment ou bouture de vigne, ledit corps-mère (**4**) étant de forme allongée et comportant, sur toute sa longueur délimitée par deux extrémités et à intervalles réguliers ou non, une suite de repères fixes (**10**) correspondant à une modification du profil de la section du corps-mère (**4**), ladite machine comprenant :

– un chemin de défilement (**18**) pour le corps-mère (**4**) à travers la machine,

– au moins un dispositif d'entraînement (**14, 30**) selon une direction (**A**) du corps-mère (**4**) à travers la machine et le long du chemin de défilement (**18**),

– un dispositif de coupe (**24**) monté en position fixe, à proximité ou dans le chemin de défilement (**18**), de manière à effectuer une coupe sensiblement transversale du corps-mère (**4**),

– un dispositif de détection (**19**) des repères fixes monté dans le chemin de défilement (**18**), en amont du dispositif de coupe (**24**),

– un dispositif de détection (**34**) d'une longueur préétablie (**L**) de la portion du corps-mère (**4**), comprise entre son extrémité aval et le dispositif de coupe (**24**), et envoyant un signal de détection de longueur,

et étant caractérisée par :

– un automate (**22**) de contrôle et de commande automatique, relié fonctionnellement aux dispositifs de coupe (**24**), de détection (**19**) des repères fixes (**10**) et de détection (**34**) de longueur, chargé de stocker, traiter et comparer les signaux émis par lesdits dispositifs et de commander la mise en oeuvre du dispositif de coupe (**24**), lorsque simultanément la longueur (**L**) est atteinte, et un repère fixe (**10**) est détecté en amont du dispositif de coupe (**24**) à une distance préétablie (x).

12. Machine selon la revendication 11, caractérisée en ce que le dispositif de détection (**19**) des repères fixes (**10**) comporte un capteur (**20**) de déplacement qui palpe la périphérie de la section transversale du corps-mère (**4**) par l'intermédiaire d'une liaison mécanique articulée et qui envoie des signaux proportionnels à son déplacement.

13. Machine selon la revendication 11, caractérisée en ce que le dispositif de détection (**34**) de la longueur (**L**) comprend un volet (**36**) monté mobile dans le chemin de défilement (**18**) en aval du dispositif de coupe (**24**).

14. Machine selon la revendication 11, caractérisée en ce que le dispositif d'entraînement (**14, 30**) comporte des paires de galets entre lesquels passe le corps-mère (**4**).

15. Machine selon la revendication 11, caractérisée en ce qu'elle comprend, en outre, un dispositif de triage et de sélection (**41**) des tronçons coupés, relié fonctionnellement à l'automate (**22**) de contrôle et de commande.

16. Machine selon la revendication 15, caractérisée en ce que le dispositif de triage et de sélection comporte :

– au moins une trappe mobile (**42**) constituant en partie le fond du chemin de défilement,

– un jeu de trappes escamotables (**45, 46**) en regard de la trappe mobile (**42**).

17. Machine selon la revendication 11, caractérisée en ce que l'automate (**22**) de contrôle comporte un registre de comptage des repères fixes détectés.

**Patentansprüche**

1. Verfahren zum automatischen In-Stücke-Schneiden ausgehend von einem Mutterkörper (4) von der Art von Reben oder Rebstöcken von länglicher Form, deren Länge, begrenzt durch zwei Enden, in regelmäßigen oder unregelmäßigen Beständen eine Aufeinanderfolge von festen Aufnahmen (10) entsprechend einer Profilmodifikation des Querschnitts des Mutterkörpers (4) aufweist, wobei der Körper mitgenommen wird, um gemäß einer Richtung (A) von einem Ende zum anderen in einem Förderweg (18) mittels wenigstens einer Antriebsvorrichtung (14, 30) vor einer Schneidevorrichtung (24) vorbeigeführt zu werden, die eine feste Position besetzt, wobei das Schneideverfahren besteht aus:

– Einführen des Mutterkörpers (4) in ein Ende in oder auf dem Förderweg (18), um das Vorbeibewegen des Mutterkörpers (4) gemäß der Richtung (A) sicherzustellen,

– befassen stromauf der Schneidevorrichtung (24) der festen Markierungen (10),

– befassen, wenn sie erreicht ist, einer vorbestimmten Länge (L), die der Länge des Bereiches des Mutterkörpers zwischen dem Einführende und dem Schneidewerkzeug (24) entspricht,

– Ausführen eines Schnitts des Mutterkörpers (4) mit Hilfe der festen Schneidevorrichtung (24), wobei das Verfahren dadurch gekennzeichnet ist, daß es besteht aus:

– Identifizieren vor dem Einführen des Mutterkörpers (4), ausgehend von einem ersten Ende des Mutterkörpers (4), der ersten festen Markierung (10), die mit einem bestand, der größer oder gleich einem vorabbestimmten Wert (x) ist, vom Einführende angeordnet ist, sodann Verwirklichen eines ersten Schnitts des Mutterkörpers (4) bei diesem bestand (x) der ersten, festen identifizierten Markierung (10),

– Erfassen der festen Markierungen (10) auf kontinuierliche Weise und entsprechend dem Vorbeibewegen des Mutterkörpers (4),

– Ausführen eines zweiten Schnitts des Mutterkörpers (4) mit Hilfe der festen Schneidevorrichtung (24), wenn gleichzeitig die Länge (L) erreicht ist, und eine feste Markierung (10) stromauf des Schneidewerkzeugs im bestand (x) erfaßt wird,

– bezeugen von n zusätzlichen Schnitten gemäß denselben kriterien der Länge (L) und des Abstands (x), die für den zweiten Schnitt verwendet werden, bis zum Ende des Vorbeibewegens des Mutterkörpers (4).

2. Verfahren nach Anspruch 1, **dadurch gekennzeichnet, daß** das befassen der festen Markierung (10) daraus besteht, die Änderungen des Querschnitts des Mutterkörpers (4) durch Messungen der Abemessungen, genommen bei Intervallen von aufeinanderfolgender Zeit, anzunehmen.

3. Verfahren nach Anspruch 2, **dadurch gekennzeichnet, daß** die Veränderung des Querschnitts des Mutterkörpers erfaßt wird durch Vergleichen von zwei aufeinanderfolgenden Messungen, wobei die zweite um eine Empfindlichkeitskonstante erhöht wird.

4. Verfahren nach Anspruch 3, **dadurch gekennzeichnet, daß** das Wert der Empfindlichkeitskonstante ständig wieder aktualisiert wird, um einer fortschreitenden Änderung der Form des Mutterkörpers (4) von einem Ende zum anderen Rechnung zu tragen.

5. Verfahren nach Anspruch 3 oder 4, **dadurch gekennzeichnet, daß** die Meßwerte der Veränderung des Querschnitts des Mutterkörpers (4) verglichen werden mit einem vorbestimmten, minimalem Wert, der einem minimalen, akzeptierbaren Schwellenwert für die Abmessungen des Querschnitts des Mutterkörpers (4) entspricht.

6. Verfahren nach Anspruch 1, **dadurch gekennzeichnet, daß** es weiterhin daraus besteht, das Zählen einer jeden festen Markierung, die stromauf der Schneidevorrichtung (24) erfaßt wird, sicherzustellen.

7. Verfahren nach Anspruch 6, **dadurch gekennzeichnet, daß** der Schnitt des Mutterkörpers (4) mit Hilfe der Schneidevorrichtung (24) ausgeführt wird, wenn gleichzeitig die Länge (L) erreicht ist, eine feste Markierung stromauf der Schneidevorrichtung bei einem Abstand (x) vor dem Schneidewerkzeug erfaßt wird und eine Anzahl (N) von festen Markierungen (10) gezählt ist.

8. Verfahren nach Anspruch 7, **dadurch gekennzeichnet, daß** die Anzahl (N) = 2 ist.

9. Verfahren nach einem der Ansprüche 5 bis 8 **dadurch gekennzeichnet, daß** es weiterhin daraus besteht, ein Herausgreifen und Auswählen von geschnittenen Stücken in Abhängigkeit des Ergebnisses des Vergleichs von Meßwerten des Querschnitts des Mutterkörpers mit einem vorbestimmten Minimalwert durchzuführen.

10. Verfahren nach Anspruch 9, **dadurch gekennzeichnet, daß** es daraus besteht, ein Aussortieren und Auswählen von geschnittenen Stücken in Abhängigkeit der Länge (L) durchzuführen.

11. Automatische Schneidemaschine (1) von Stücken eines Mutterkörpers (4) vom Typ der Reben oder Rebstöcke, wobei der Mutterkörper (4) eine längliche Form aufweist und über seine gesamte Länge, die von zwei Enden begrenzt wird, in regelmäßigen oder unregelmäßigen beständen eine Aufeinanderfolge von festen Markierungen (10) aufweist entsprechend einer Veränderung des Profils des Querschnitts des Mutterkörpers (4), wobei die Maschine aufweist:

– einen Förderweg (18) für den Mutterkörper (4) durch die Maschine hindurch,

– wenigstens eine Antriebsvorrichtung (14, 30) gemäß einer Richtung (A) des Mutterkörpers (4) durch die Maschine und entlang des Förderwegs (18),

– eine Schneidevorrichtung (24), die derart in fester Stellung in der Nähe oder im Weg der Förderung (18) montiert ist, daß sie einen im wesentlichen quer verlaufenden Schnitt des Mutterkörpers (4) durchführt,

– eine Erfassungsvorrichtung (19) der festen Markierungen, die in dem Förderweg (18) oberhalb der Schneidevorrichtung (24) montiert sind, eine Erfassungsvorrichtung (34) einer voreingestellten Länge (L) des Stücks des Mutterkörpers (4) zwischen seinem stromabwärtigen Ende und der Schneidevorrichtung (24) und Aussenden eines Erfassungssignals der Länge, und gekennzeichnet ist durch:

– einen Steuer- und automatischen Betätigungsautomaten (22), der funktionsmäßig mit der Schneidevorrichtung (24) der Erfassungsvorrichtung (19) der festen Markierungen (10) und der Erfassungsvorrichtung (34) der Länge verbunden ist, der dazu dient, die Signale zu speichern, zu verarbeiten und zu vergleichen, die von den Vorrichtung ausgesandt werden und den Betrieb der Schneidevorrichtung (24) zu steuern, wenn gleichzeitig die Länge (L) erreicht ist und eine feste Markierung oberhalb der Schneidevorrichtung (24) mit einem vorbestimmten Abstand (x) erfaßt wird.

12. Maschine nach Anspruch 11, **dadurch gekennzeichnet, daß** die Erfassungsvorrichtung (19) der festen Markierungen (10) einen Bewegsaufnehmer (20) aufweist, der den Umfang des Querschnitts des Mutterkörpers (4) mittels einer mechanisch angelenkten Verbindung abtastet und der zu seiner Bewegung proportionale Signale aussendet.

13. Maschine nach Anspruch 11, **dadurch gekennzeichnet, daß** die Erfassungsvorrichtung (34) der Länge (L) eine Klappe (36) aufweist, die auf bewegliche Weise in dem Förderweg (18) stromab der Schneidevorrichtung angeordnet ist.

14. Maschine nach Anspruch 11, **dadurch gekennzeichnet, daß** die Antriebsvorrichtungen (14, 30) Paare von Walzen aufweisen, zwischen denen der Mutterkörper (4) hindurchgeht.

15. Maschine nach Anspruch 11, **dadurch gekennzeichet, daß** sie weiterhin eine Sortier- und Auswählvorrichtung (41) der geschnittenen Stücke aufweist, die funktionsmäßig mit dem Steuer- und Betätigungsautomaten (22) verbunden ist.

16. Maschine nach Anspruch 15, **dadurch gekennzeichnet, daß** die Sortier- und Auswählvorrichtung aufweist:
  – wenigstens eine bewegliche Falle (42), die teilweise dem Boden des Förderweges bildet,
  – einen Satz von einziehbaren Fallen (45, 46) gegenüber der bewegbaren Falle (42).

17. Maschinen nach Anspruch 11, **dadurch gekennzeichnet, daß** der Steuerautomat (22) ein Zählregister der erfaßten, festen Markierungen aufweist.

**Claims**

1. Method of automatically cutting up into lengths an elongate parent-body (4) of the vine shoot or cutting type, the body having a sequence of fixed reference marks (10) at regular or irregular intervals along its length between two ends, said marks corresponding to changes in the profile of the cross-section of the parent-body (4), said body being caused to run along a direction (A), from one end to the other along a running path (18) under drive from at least one driver means (14,30) so as to go past a cutting device (24) occupying a stationary position, the cutting up method consisting in:
  – inserting one end of the parent-body (4) in or on the running path (18), so as to cause the parent-body (4) to run along the direction (A);

  – detecting the fixed reference marks (10) upstream from the cutting device (24);
  – detecting when a pre-established length (L) has been reached, said length corresponding to the length of the portion of the parent-body lying between its insertion end and the cutting device (24);
  – cutting the parent-body (4) using the stationary cutting device (24);

said method being characterized in that it consists in:
  – identifying the first of the fixed reference marks (10) that is situated at a distance greater or equal to a pre-determed value (x) of the insertion end prior to inserting the parent-body (4) from an end thereof, and then in cutting the parent-body (4) a first time at said distance (x) from the first identified fixed reference (10);
  – continuously detecting the fixed references (10) as the parent-body (4) runs past;
  – cutting the parent-body (4) a second time using the stationary fixed cutting device (24) when, simultaneously, both the length (L) has been reached and a fixed reference (10) is detected as being at the distance (x) upstream from the cutting device; and
  – making n additional cuts using the same criteria for the length (L) and for the distance (x) as used for the second cut, until the parent-body (4) has finished going past.

2. Method according to claim 1, characterized in that the fixed references (10) are detected by observing variations in the section of the parent-body (4) by measuring its dimensions at successive time intervals

3. Method according to claim 2, characterized in that the variation in the section of the parent-body is observed by comparing two successive measurements, with the second measurement being increased by a sensitivity constant.

4. Method according to claim 3, characterized in that the value of the sensitivity constant is updated on a continuous basis in order to take account of progressive change in the shape of the parent-body (4) from one end to the other.

5. Method according to claim 3 or 4, characterized in that the measured values of variation in the section of the parent-body (4) are compared with a pre-established minimum value corresponding to a minimum acceptable threshold for the size of the section of the parent-body (4).

6. Method according to claim 1, characterized in that it also consists in counting the number of fixed reference marks (10) as detected upstream from the cutting device (24).

7. Method according to claim 6, characterized in that the parent-body (4) is cut by means of the cutting device (24), when simultaneously, the length (L) is reached, a fixed reference is detected at a distance (x) upstream from the cutting device, and a number (N) of fixed references (10) have been counted.

8. Method according to claim 7, characterized in that the number (N) is equal to two.

9. Method according to one of claims 5 to 8, characterized in that it further consists in sorting and selecting the cut-off lengths as a function of the result of the comparison between the measured values of the section of the parent-body and the pre-established minimum value.

10. Method according to claim 9, characterized in that it consists in performing sorting and selection of cut-off lengths as a function of the length (L).

11. Machine (1) for automatically cutting up into lengths a parent-body (4) of the vine cutting or shoot type, the said parent-body (4) being elongate in shape and having a sequence of fixed references (10) corresponding to a change in the profile of the section of the parent-body (4), at regular or irregular intervals along its entire length delimited between two ends, said machine comprising:
   – a running path (18) for the parent-body (4) through the machine;
   – at least one driver device (14,30) for driving the parent-body (4) along a direction (A) through the machine and along the running path (18);
   – a cutting device (24) mounted at a stationary position, in the proximity of or on the running path (18) so as to cut the parent-body (4) substantially transversely;
   – a device (19) for detecting the fixed references and mounted on the running path (18) upstream from the cutting device (24); and
   – a detection device (34) for detecting a pre-established length (L) of that portion of parent-body (4) which extends between the downstream end of the parent-body and the cutting device (14), the device delivering a length detection signal;
and being characterized by:
   – a controller (22) for automatic monitoring and control and functionally connected to the cutting devices (24), to the fixed reference detection devices (19), and to the length detection devices (34), the controller serving to store, process, and compare signals delivered by the said devices and to control operation of the cutting device (24) when simultaneously the length (L) has been reached, and a fixed reference (10) is detected as being at a pre-determined distance ($\underline{x}$) upstream from the cutting device (24).

12. Machine according to claim 11, characterized in that the detection device (19) for detecting the fixed references (10) includes a displacement sensor (20) which feels the periphery of the cross-section of the parent-body (4) via an articulated mechanical linkage and which delivers signals proportional to its own displacement.

13. Machine according to claim 11, characterized in that the detection device (34) for detecting the length (L), includes a flap (36) mounted to move in the running path (18) downstream from the cutting device (24).

14. Machine according to claim 11, characterized in that the driver device (14,30) comprises pairs of rolls between which the parent-body (4) passes.

15. Machine according to claim 11, characterized in that it further includes a sorting and selection device (41) for sorting and selecting the cut-off lengths, said device being functionally connected to the controller (22) for monitoring and control.

16. Machine according to claim 15, characterized in that the sorting and selection device comprises:
   – at least one moving trap door (42) constituting a portion of the bottom of the running path; and
   – a set of retractable trap doors (45,46) facing the moving trap door (42).

17. Machine according to claim 11, characterized in that the controller (22) includes a register for counting the detected fixed references.

Fig.1

Fig.2

EP 0 374 063 B1